# EUROPEAN PATENT APPLICATION

(11) **EP 1 932 696 A2**
(43) Date of publication of application: **18.06.2008**
(21) Application number: 07022486.0
(22) Date of filing: 20.11.2007
(51) Int. Cl.: B60H 1/00

(54) **Automotive air conditioner**

(30) Priority: 15.12.2006 JP 2006338152
(71) Applicant: TGK CO., Ltd., Hachioji-shi, Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(57) **Abstract**

An automotive air conditioner having an efficiently disposed internal heat exchanger 4, contains a thermostatic expansion valve 5 accommodated in a casing 7 directly connected to the refrigerant outlet of an evaporator 6. The inlet of the expansion valve 5 and a pipe for receiving high-pressure liquid refrigerant are connected to each other within the casing 7. The outlet of the expansion valve 5 and the refrigerant inlet of the evaporator 6 are connected within the casing 7. The internal heat exchanger 4 serves to perform heat exchange between high-pressure refrigerant delivered to the inlet of the expansion valve 5 and low-pressure refrigerant returning to a compressor 1. The internal heat exchanger 4 is connected between the casing 7 and a pipe joint 9 disposed in a firewall of the automotive vehicle.

## Description

This invention relates to an automotive air conditioner according to the preamble of claim 1.

In general in an automotive air conditioner (JP-A-2001-235259) the compressor, the condenser, and the receiver for separating condensed refrigerant into gas and liquid phases and storing the liquid refrigerant are arranged in an engine room which accommodates the automotive engine driving the compressor, while the evaporator is disposed in the vehicle compartment. The expansion valve, e.g. a thermostatic expansion valve controlling the flow rate to the evaporator by sensing the temperature and pressure at the evaporator outlet is disposed between the evaporator and the compressor and between the evaporator and the receiver, in some cases in a firewall separating the engine room from the vehicle compartment. In this case the body block of the expansion valve is also used as a pipe joint for connecting between the evaporator in the vehicle compartment and the compressor and the receiver in the engine room. To use the body as the pipe joint may be very rational from the viewpoint of construction since operations for assembling component elements to the automotive vehicle are performed separately for those in the engine room and those in the vehicle compartment, and finally it is necessary to install piping in the firewall for connection via the expansion valve between the compressor and the receiver in the engine room and the evaporator in the vehicle compartment.

In a known supercritical highly efficient refrigeration cycle using carbon dioxide an internal heat exchanger is provided (JP-A-2001-108308). The internal heat exchanger causes heat to be exchanged between refrigerant flowing from a gas cooler to an expansion device and refrigerant returning from an evaporator to a compressor. This known refrigeration cycle instead may operate with chlorofluorocarbon (HFC-134a), , or with a gas having a physical property equivalent or similar to that of chlorofluorocarbon. The internal heat exchanger needs to install pipings to the inlet and outlet of the internal heat exchanger, which complicates the construction of the refrigeration cycle and causes difficulties when installing the component elements in the automotive vehicle. Further, the internal heat exchanger returns refrigerant from the evaporator to the compressor after superheating the refrigerant by refrigerant sent from the condenser to the expansion valve, and hence when the refrigeration load is low, the efficiency of the refrigeration cycle can be improved. However, when the refrigeration load is high, the temperature of refrigerant returned to the compressor tends to become so high that lubricating oil as contained in the refrigerant for the compressor may suffer from thermal deterioration.

It is an object of the invention to provide an automotive air conditioner which both allows to efficiently dispose an internal heat exchanger to perform an efficient operation.

The object is achieved by the features of claim 1.

The automotive air conditioner is configured such that the evaporator, the expansion valve, and the pipe joint are connected by the internal heat exchanged with component elements on a vehicle compartment side in compact arrangement, whereby improvement of the efficiency of the refrigeration cycle by the installation of the internal heat exchanger is made possible, while dispensing with a special space for disposing the internal heat exchanger. Further, although in the refrigeration cycle having the internal heat exchanger, the temperature of refrigerant discharged from the compressor during high load tends to become too high, refrigerant having been just expanded is mixed in refrigerant returning from the evaporator to the compressor to thereby lower the temperature of the returning refrigerant, and in turn the temperature of the discharged refrigerant, both preventing thermal deterioration of lubricating oil for the compressor.

### Brief description of the drawings:

- Fig. 1: is a system diagram of a refrigeration cycle for an automotive air conditioner,
- Fig. 2: is an axial section of a first embodiment of a unit disposed in a vehicle compartment,
- Fig. 3A: is an enlarged axial section of essential parts of an expansion valve,
- Fig. 3B: is a cross-section taken on line a-a of Fig. 3A,
- Fig. 4: is a sectional view of a pipe connected to an inlet of the expansion valve,
- Fig. 5: is an end view of a pipe joint,
- Fig. 6A: is an enlarged axial section of essential parts of an expansion valve (second embodiment),
- Fig. 6B: is a cross-section taken on line b-b of FIG. 6A.
- Fig. 7: is an axial section of a differential pressure valve (third embodiment),
- Fig. 8A: is a perspective view of an end of an example of the internal heat exchanger, and
- Fig. 8B: is a perspective cross-section of an example of a high-pressure pipe.

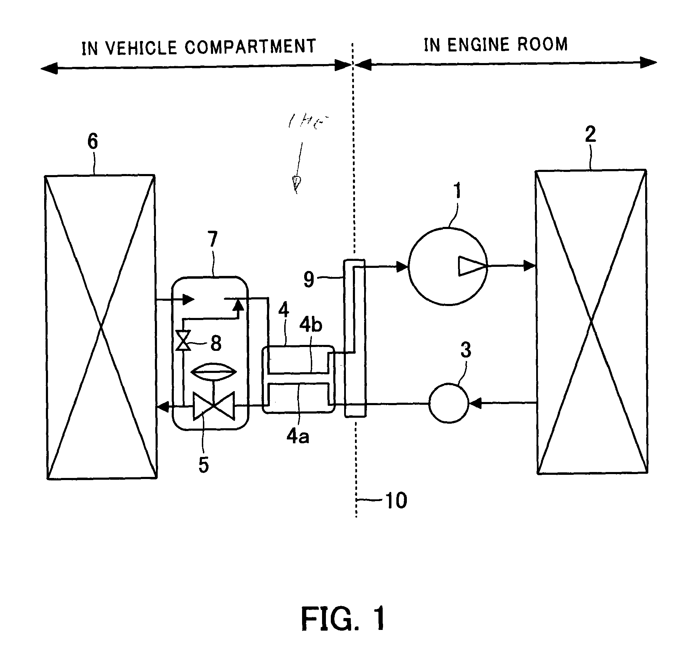

In the automotive air conditioner in Fig. 1, a compressor 1 for compressing refrigerant, a condenser 2 for condensing the compressed refrigerant by heat exchange between the refrigerant and the outside air, and a receiver 3 for separating the condensed refrigerant into gas and liquid phases and storing surplus refrigerant within the refrigeration cycle are arranged in an engine room of a not shown automotive vehicle. An internal heat exchanger 4 for performing heat exchange between high-temperature, high-pressure refrigerant from the receiver 3 and low-temperature, low-pressure refrigerant returning to the compressor 1 a thermostatic expansion valve 5 and an evaporator 6 are disposed in a vehicle compartment. The outlet of the internal heat exchanger 4 on the high-pressure side is connected to the inlet of the thermostatic expansion valve 5, and the outlet of the thermostatic expansion valve 5 is connected to the inlet of the evaporator 6. The outlet of the evaporator 6 opens into a casing 7 in the vehicle compartment accommodating the thermostatic expansion valve 5. The casing 7 is connected to the inlet of the compressor 1 via the internal heat exchanger 4.

A differential pressure valve 8 within the casing 7 connects the outlet of the expansion valve 5 and the inlet of the internal heat exchanger 4 on the low-pressure side. A pipe joint 9 is disposed in a firewall 10 separating the engine room from the vehicle compartment, for connecting between pipes to the compressor 1 and the receiver 3 in the engine room and the internal heat exchanger 4 in the vehicle compartment.

The expansion valve 5 includes a temperature-sensing section for sensing the temperature and pressure of refrigerant leaving the evaporator 6, and controls the flow rate of refrigerant sent to the evaporator 6 according to the temperature and pressure of the refrigerant leaving the evaporator. The whole expansion valve 5 is accommodated in the casing 7 directly connected to the refrigerant outlet of the evaporator 6. Connections between the inlet of the expansion valve 5 and a pipe for receiving liquid refrigerant from the internal heat exchanger 4, and between the outlet of the expansion valve 5 and a pipe to the refrigerant inlet of the evaporator 6 are both provided within the casing 7. Moreover, the casing 7 forms part of a low-pressure return pipe for returning refrigerant from the evaporator 6 to the compressor 1. For this reason, even if a minute amount of refrigerant should leak through sealing portions of the inlet and outlet of the expansion valve 5, the refrigerant leaks only into the casing 7, i.e. only into the low-pressure return pipe, and hence is prevented from leaking to the outside of the refrigeration cycle.

The internal heat exchanger 4 includes a high-pressure pipe 4a (forward pipe) directing high-temperature, high-pressure refrigerant to the expansion valve 5, and a low-pressure pipe 4b (return pipe) directing low-temperature, low-pressure refrigerant to the compressor 1. The internal heat exchanger 4 performs heat exchange between the high-temperature, high-pressure refrigerant in the high-pressure pipe 4a and the low-temperature, low-pressure refrigerant in the low-pressure pipe 4b.

The displacement of the compressor 1 driven by an automotive engine is controlled such that refrigerant is discharged at a predetermined flow rate, irrespective of the rotational speed of the engine. Compressed refrigerant is condensed in the condenser by heat exchange with outside air and flows to the receiver 3. Liquid refrigerant obtained by gas/liquid separation in the receiver 3 is sent via the internal heat exchanger 4 to the expansion valve 5, where the liquid refrigerant is throttled and expanded into atomized low-temperature, low-pressure refrigerant, being sent to the evaporator 6, where the refrigerant exchanges heat with air in the vehicle compartment to evaporate and cools air in the vehicle compartment.

Evaporated refrigerant returns to the compressor 1 via the casing 7 and the internal heat exchanger 4. In the casing 7, the temperature-sensing section of the expansion valve 5 senses the temperature and pressure of the refrigerant leaving the evaporator 6. The expansion valve 5 controls the flow rate to the evaporator 6 such that the refrigerant leaving the evaporator 6 has a predetermined degree of superheat. Refrigerant returning to the compressor 1 via the low-pressure pipe 4b is further superheated by high-temperature, high-pressure refrigerant in the high-pressure pipe 4a. This enhances the efficiency of the refrigeration cycle.

The differential pressure valve 8 senses the differential pressure between evaporator inlet and the evaporator outlet. When a pressure loss across the evaporator 6 increases, the differential pressure valve 8 opens. Refrigerant at the outlet of the expansion valve 5 bypasses to the low-pressure pipe 4b. This increases the refrigeration load to increase the circulating flow rate. When the pressure loss exceeds a predetermined value, the differential pressure valve 8 opens to supply refrigerant which is throttled and expanded by the expansion valve 5 into atomized low-temperature, low-pressure refrigerant. In other words, when the refrigeration load is high, moist refrigerant is supplied to the low-pressure pipe 4b thereby preventing an insufficient temperature rise of refrigerant returned to the compressor 1 and also preventing thermal deterioration of lubricating oil for the compressor 1.

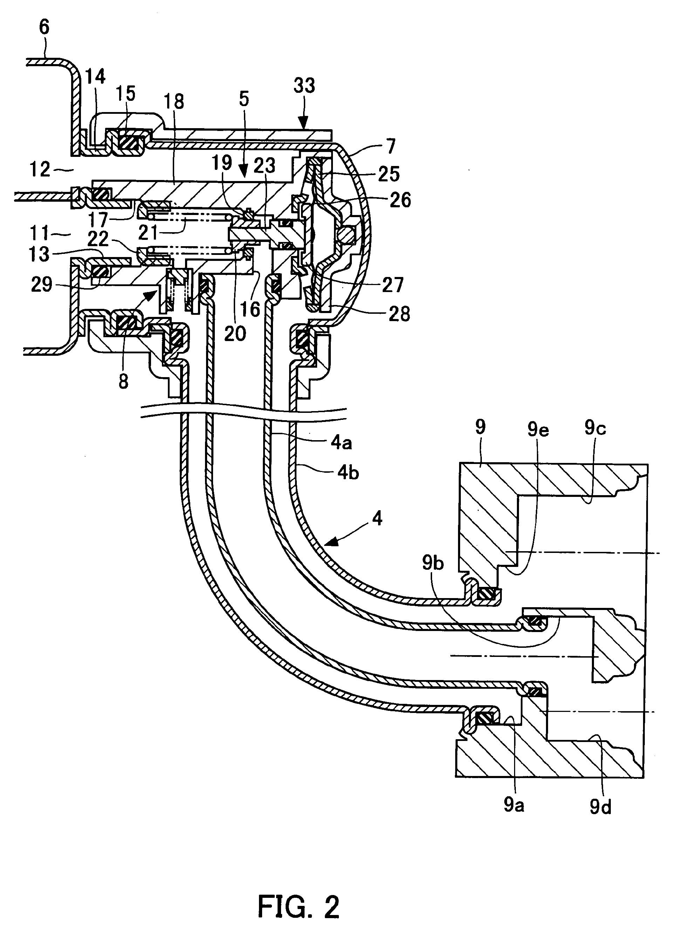

In Figs 2, 3A, 3B, 4 and 5 the evaporator 6 has an inlet 11 and an outlet 12 formed in the same evaporator end face. An inlet pipe 13 is joined to the refrigerant inlet 11, and a hollow cylindrical connecting part 14 enclosing the inlet 11 and the outlet 12 is joined to the evaporator end face. Preferably, the inlet pipe 13 and the connecting part 14 are integrally formed with the evaporator 6 by being welding to the evaporator 6 when the evaporator 6 is assembled by furnace brazing.

The hollow cylindrical casing 7 has a closed end and accommodates the expansion valve 5 which is hermetically joined via an O-ring to a connecting part 14. The expansion valve 5 has a body 18 made e.g. of a resin material. The body 18 is integrally formed with an inlet port 16 for introducing high-pressure refrigerant and an outlet port 17 for discharging low-pressure refrigerant. The body 18 has a passage between the inlet port 16 and the outlet port 17. A valve seat 19 is inserted in an intermediate portion of the passage.

A movable valve element 20 is disposed on the downstream side of the valve seat 19. The valve element 20 is urged by a spring 21 in valve-closing direction. The spring 21 is received by an adjustment screw 22 screwed into the outlet port 17. The load of the spring 21 is adjusted by the screwing depth of the adjustment screw 22 to adjust the set point of the expansion valve 5.

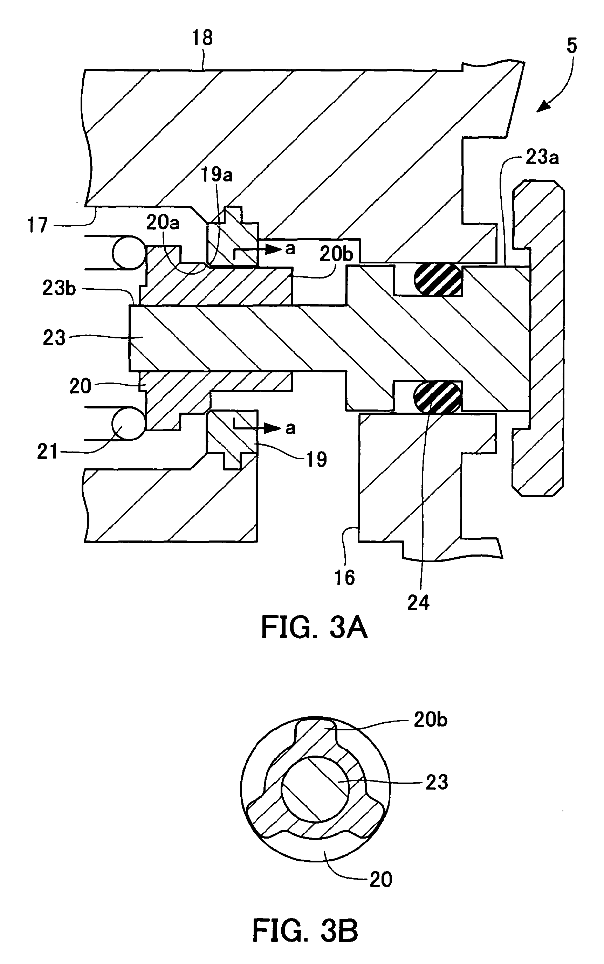

The valve element 20 is rigidly fixed to a small diameter portion 23b of a shaft 23. The shaft 23 in Fig. 3 includes a large-diameter portion 23a movably guided by the body 18 and the small-diameter portion 23b extending through a valve hole of the valve seat 19. The large-diameter portion 23a has a circumferential groove for an O-ring 24 sealing between the inlet port 16 and the casing 7.

The large-diameter portion 23a is configured with a back pressure cancelling structure, meaning that the large-diameter portion 23a has an outer diameter equal to the inner diameter of the valve hole of the valve seat 19. The force of high pressure at the inlet port 16 acts on the valve element 20 in valve-opening direction, while the force of the high pressure acts on the large-diameter portion 23a in valve-closing direction. The forces are substantially equal to prevent the valve element 20 from being adversely affected by the high pressure introduced. Since the outer diameter of the large-diameter portion 23a and the inner diameter of the valve hole of the valve seat 19 are equal, the shaft 23 cannot be inserted from the outlet port side into the expansion valve 5 through the valve hole of the valve seat 19 with the O-ring 24 fitted on the large-diameter portion 23a. Therefore, the shaft 23 is inserted from a side opposite to the outlet port 17, and the valve element 20 is fitted from the outlet port side onto the small-diameter portion 23b of the shaft 23 extending through the valve hole of the valve seat 19, to assemble the shaft 23 and the valve element 20.

The valve element 20 has a tapered portion 20a which can be seated on a tapered portion 19a on the inner periphery on the downstream side of the valve seat 19. A portion situated inward of the tapered portion 20a is integrally formed with radially outwardly projecting three guides 20b at circumferentially equal intervals. The guides 20b may slide along the inner wall of the valve hole, while they define refrigerant passages between adjacent ones of the guides 20b, and also guide opening or closing operations of the valve element 20 and position the valve element 20 in the centre of the valve hole. This prevents the valve element 20 from rolling preventing the valve element 20 from vibrating radially.

The body 18 has a power element 25 comprising upper and lower housings of thick metal, a flexible thin metal plate diaphragm 26 partitioning a space enclosed by the housings, and a centre disk 27 transmitting displacements of the diaphragm 26 to the shaft 23. The space enclosed by the upper housing and the diaphragm 26 forms a temperature-sensing chamber, which is filled with refrigerant gas or the like. The lower housing has several gas-passing holes for guiding refrigerant passing through the casing 7 into a space at the centre disk side. The amount of refrigerant to be introduced into the space is adjusted by changing the size or number of the gas-passing holes. A heat-insulating cover 28 made e.g. of resin, is attached to the power element 25 and also serves as a fixing element for fixing the power element 25 to the body 18.

The differential pressure valve 8 in the body 18 is configured with a passage for causing a space accommodating the spring 21 to communicate with the outside of the expansion valve 5. A valve element for opening and closing the passage is urged by a spring from the outside of the expansion valve 5 in passage closing direction. When the pressure at the outlet port 17 of the expansion valve 5 becomes higher than the pressure outside the expansion valve 5 (i.e. the interior of the casing 7) by a value exceeding a predetermined value, the differential pressure valve 8 acts to open. The predetermined value is set by adjusting the load of the spring urging the valve element of the valve P in passage closing direction.

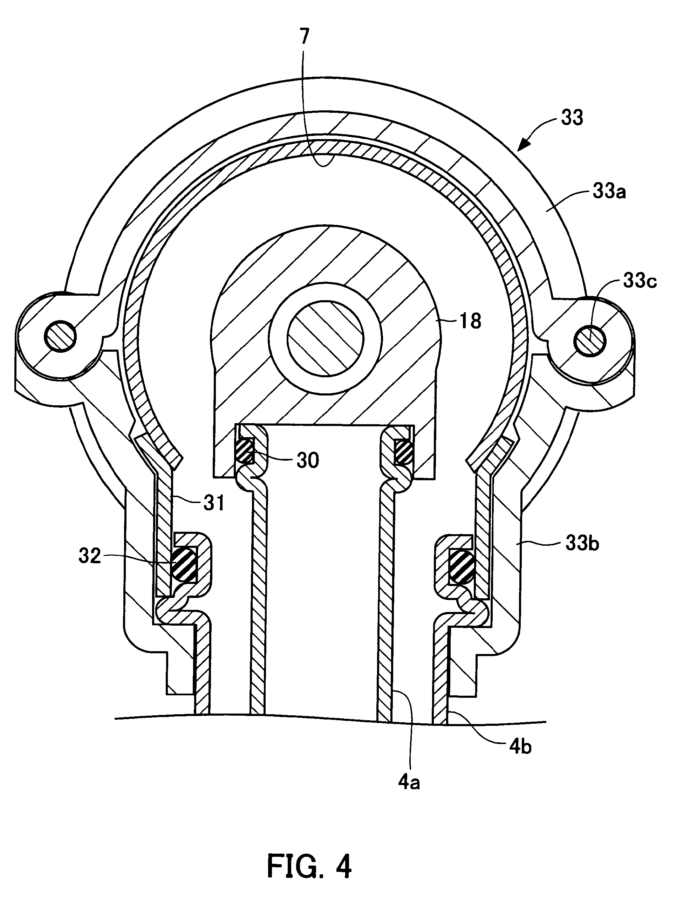

The outlet port 17 of the expansion valve 5 is fitted on the inlet pipe 13 of the evaporator 6 and is sealed by an O-ring 29. The inlet port 16 of the expansion valve 5 and the casing 7 are directly connected to the internal heat exchanger 4. The internal heat exchanger 4 is formed as a double pipe in which the low-pressure pipe 4b is coaxially disposed outside and around the high-pressure pipe 4a, so that one end of the high-pressure pipe 4a and one end of the low-pressure pipe 4b are connected to the inlet port 16 of the expansion valve 5 and the casing 7, respectively. More specifically, the high-pressure pipe 4a is fitted into the inlet port 16 of the expansion valve 5 and is sealed by an O-ring 30. As to the casing 7, as shown in Fig. 4, a hollow cylindrical connecting pipe 31 is brazed to a casing side surface, and the low-pressure pipe 4b is fitted into the connecting pipe 31 and is sealed by an O-ring 32.

The expansion valve 5, the casing 7, the high-pressure pipe 4a and the low-pressure pipe 4b are connected to each other by a clamp device 33. As shown in Fig. 4, the clamp device 33 includes a first holding member 33a covering a half of a side surface of the casing 7, a second holding member 33b covering the remaining half of the side surface of the casing 7 including the connecting pipe 31, and fixing pins 33c connecting the first and second holding members 33a, 33b. The first and second holding members 33a, 33b have restricting portions for covering respective fitting portions of the connecting part 14 and the casing 7 where they are fitted to each other, from outside along the whole circumference thereof, such that the restricting portions restrict the motions of the connecting part 14 and the casing 7 in the fitting direction. The second holding member 33b has an engaging portion engaged with a rib formed in the vicinity of a foremost end of the low-pressure pipe 4b, in addition to the restricting portion, such that when the first and second holding members 33a, 33b are connected by the fixing pins 33c the rib of the low-pressure pipe 4b permanently is pressed against the connecting pipe 31. Since the high-pressure pipe 4a and the low-pressure pipe 4b are coaxially connected to each other, the connected state of the high-pressure pipe 4a and the inlet port 16 of the expansion valve 5 is also maintained. The closed end of the casing 7 holds the power element 25 when the casing 7 is fitted in the connecting part 14, which causes the connection between the outlet port 17 of the expansion valve 5 and the inlet pipe 13 of the evaporator 6 to be also maintained.

As the expansion valve 5 is accommodated in the low-pressure pipe 4b, and the expansion valve 5 and the internal heat exchanger 4 are connected to each other in the low-pressure return pipe 4b, and hence the connecting portion between the inlet port 16 and the high-pressure pipe 4a is the only connecting portion of the high-pressure system in the vehicle compartment where refrigerant could leak out. Since this sole connecting portion is located within the low-pressure pipe 4b, even if a minute amount of high-pressure refrigerant should leak past the O-ring 30, the refrigerant will remain in the low-pressure return pipe 4b without leaking out to the atmosphere or into the vehicle compartment.

The pipe joint 9 is disposed on a side of the internal heat exchanger 4, opposite from the side where the casing 7 is disposed. In an end face of the pipe joint 9 on the internal heat exchanger side a first connecting hole 9a for the low-pressure pipe 4b, and a second connecting hole 9b for the high-pressure forward pipe 4a which is coaxially disposed in the first connecting hole 9a are provided. The low-pressure pipe 4b fitted in the first connecting hole 9a is fixed to the pipe joint 9 by inwardly swaging the outer periphery of the first connecting hole 9a such that it is entirely circumferentially engaged with a rib formed in the vicinity of the foremost end of the low-pressure return pipe 4b.

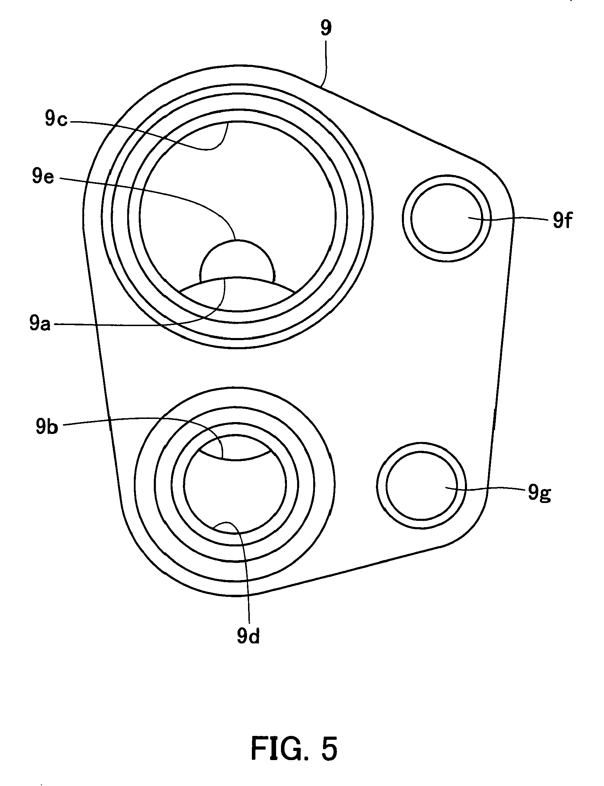

As shown in Fig. 5, the pipe joint 9 has in an end face on the engine room side parallel third and a fourth connecting holes 9a, 9d for communication with the first connecting hole 9a and the second connecting hole 9b, respectively.

It should be noted that in the present embodiment, the pipe joint 9 has an expanding hole 9e formed in the end face, for expanding a passage between the first connecting hole 9a and the third connecting hole 9c. Furthermore, screw holes 9f and 9g are formed adjacent to the third connecting hole 9c and the fourth connecting hole 9d in the end face of the pipe joint 9, respectively. The screw hole 9f is provided for screwing a fixing plate provided in the vicinity of the foremost end of a low-pressure pipe after the low-pressure pipe extending to the refrigerant inlet of the compressor 1 is fitted in the third connecting hole 9c from the engine room side. The screw hole 9g is provided for screwing a fixing plate provided in the vicinity of the foremost end of a high-pressure pipe after the high-pressure pipe extending from the receiver 3 is fitted in the fourth connecting hole 9d from the engine room side.

### Operation of the unit in the vehicle compartment:

When the automotive air conditioner is not in operation, gas filling the temperature-sensing chamber of the power element 25 is condensed (low gas pressure). As shown in Fig. 2, then expansion valve 5 is fully closed.

When the automotive air conditioner is started in this state, refrigerant is sucked by the compressor 1, and hence pressure within the low-pressure pipe 4b drops. The power element 25 senses this, so that the diaphragm 26 is displaced outward to lift the valve element 20 via the shaft 23 from the valve seat 19. On the other hand, liquid refrigerant obtained by gas/liquid separation in the receiver 3 is supplied to the inlet port 16 of the expansion valve 5 through the high-pressure pipe 4a and is throttled and expanded while passing through the expansion valve 5 and flows out from the outlet port 17 as low-temperature, low-pressure gas-liquid mixture refrigerant, is supplied to the evaporator 6 through the inlet pipe 13, is evaporated in the evaporator 6, and flows out through the outlet 12. The refrigerant from the evaporator 6 returns to the compressor 1 via the casing 7, the low-pressure pipe 4b, the pipe joint 9, and the low-pressure pipe.

While refrigerant having returned from the evaporator 6 is passing through the casing 7, some of the refrigerant is introduced via the gas-passing holes into the space within the power element 25, and the temperature of the introduced refrigerant is detected by the power element 25. In an early stage after the start of the automotive air conditioner, the temperature of the refrigerant returning from the evaporator 6 is high due to heat exchange with high-temperature air in the compartment, so that the pressure within the temperature-sensing chamber becomes high. This causes the diaphragm 26 to be largely displaced whereby the expansion valve 5 is fully opened.

As the temperature of refrigerant returning from the evaporator 6 decreases, the pressure within the temperature-sensing chamber will also decrease. Accordingly, the diaphragm 26 is displaced whereby the expansion valve 5 moves in valve-closing direction to control the flow rate. At this time, the expansion valve 5 controls the flow rate supplied to the evaporator 6 such that the refrigerant maintains a predetermined degree of superheat. As a consequence, refrigerant in a superheated state is always returned to the compressor 1, which enables the compressor 1 to perform an efficient operation.

When refrigeration load is high as when the outside air temperature is very high, the expansion valve 5 continues to control a large flow rate. At this time, the temperature of refrigerant having passed through the expansion valve 5 is not lowered, and the evaporation temperature in the evaporator 6 is high. Moreover, the refrigerant is further superheated in the internal heat exchanger 4 while the refrigerant is returning from the evaporator 6 to the compressor 1. When the flow rate of refrigerant is large as described above, the differential pressure between the inlet and the outlet of the evaporator 6 becomes large. Now the differential pressure valve 8 detects the high differential pressure and opens. A part of the atomized refrigerant expanded into low-temperature refrigerant is mixed with superheated refrigerant from the evaporator 6 and flows into the low-pressure pipe 4b. This reduces the temperature of the superheated refrigerant such that the refrigerant comes to contain moisture. Such refrigerant is evaporated and superheated by heat exchange with high-temperature refrigerant flowing from the receiver 3 in the internal heat exchanger 4, and is then sucked by the compressor 1. This prevents the temperature of refrigerant sucked by the compressor 1 from becoming too high, and therefore the temperature of refrigerant compressed by the compressor 1 is also prevented from becoming too high, which prevents thermal deterioration of lubricating oil for the compressor 1, circulating through the refrigeration cycle together with refrigerant.

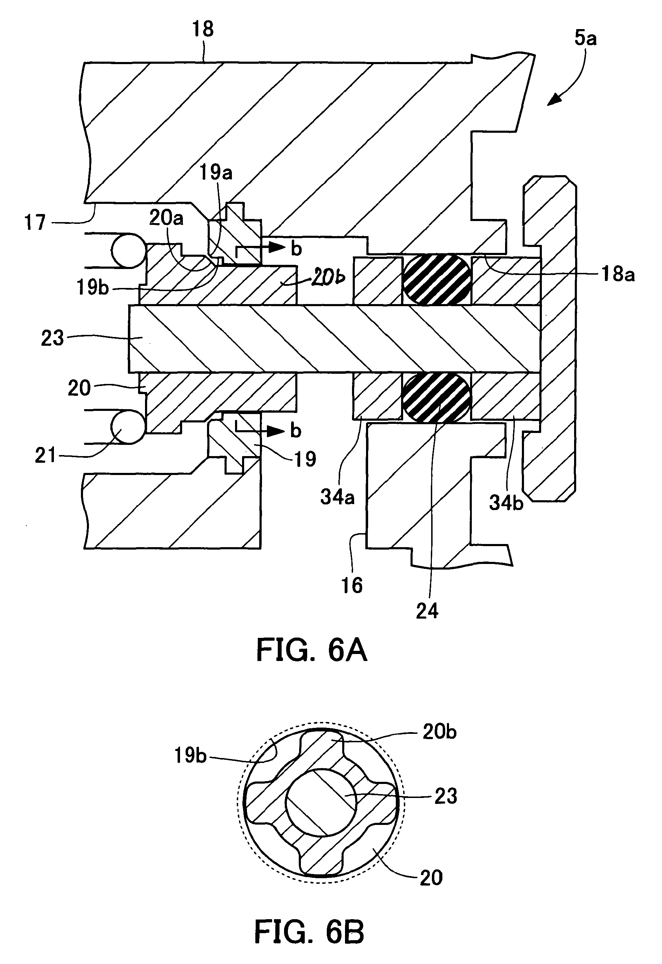

The expansion valve 5a in Figs 6A, 6B has a modified valve structure, and the shape of the guides 20b integrally formed with the valve element 20, for preventing rolling of the valve element 20, is changed. A guide for the O-ring 24 is formed by two axially spaced apart rings 34a and 34b fitted onto the shaft 23 which here has a straight cylindrical shape. The valve seat 19 of the expansion valve 5a includes the tapered portion 19a as a seating surface where the valve element 20 is seated with the tapered portion 20a. An integral valve hole shoulder 19b forms an annular space between the valve seat 19 and the tapered portion 20a of the valve element 20. A guide-holding portion has an inner diameter smaller than that of the valve hole shoulder 19b, and has an inner wall surface forming a sliding surface along which the guides 20b of the valve element 20 slide.

The inner diameter of a cylinder 18a formed in the body 18 for axially movably accommodating the rings 34a and 34b on the shaft 23 is approximately equal to the diameter of a circle forming a boundary between the tapered portion 19a of the valve seat 19 and a valve seat end face facing toward the outlet port 17. The outer diameter of the rings 34a and 34b is approximately equal to the diameter of a circle forming a boundary between the tapered portion 19a and the valve hole shoulder 19b of the valve seat 19. Thus, the effective pressure-receiving area of the valve element 20 for receiving high pressure in valve-opening direction, and the effective pressure-receiving area of the ring 34a (O-ring 24) on the shaft 23 for receiving high pressure in valve-closing direction are substantially equal. The power element 25, thus, may operate with small power and may be compact in size, and easily may be accommodated in the casing 7 to accurately control the valve element 20, the movements of which will not be adversely affected by high pressure forces.

In Fig. 6B, four guides 20b integrally formed with the valve element 20 are circumferentially arranged for axially guiding the valve element 20 while positioning the valve element 20 in the centre of the guide-holding portion of the valve seat 19.

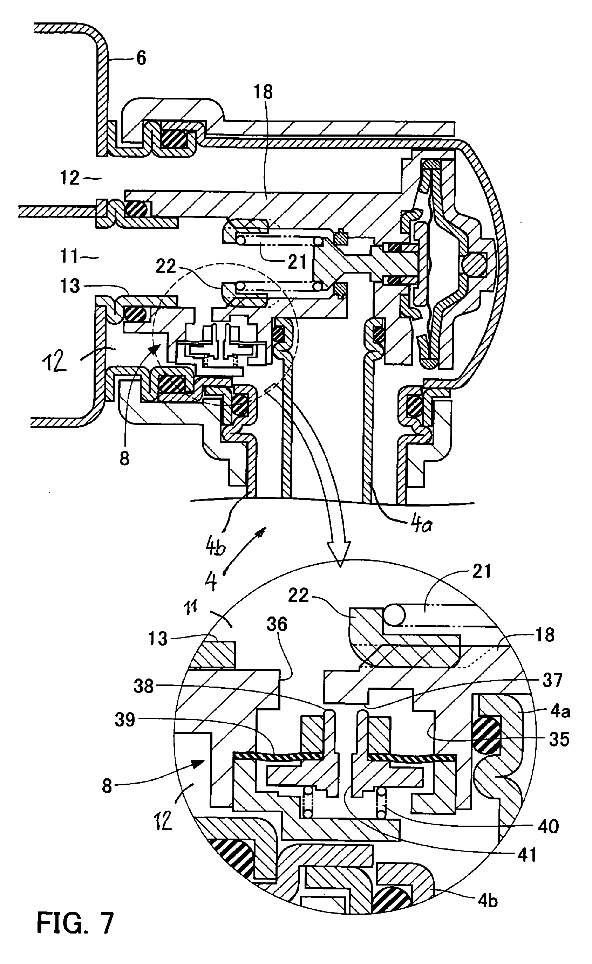

Fig. 7 shows a modified differential pressure valve 8 for delivering moist refrigerant at the outlet of the expansion valve 5 to the low-pressure pipe 4b by bypassing the evaporator 6. In the vicinity of the position of the adjustment screw 22 in the differential pressure valve 8, a hollow cylindrical portion 35 of the body 18 extends from the opening 36 in the evaporator inlet 11 to the inlet of the low-pressure pipe 4b that is to the outside of the body 18 of the expansion valve 5. The opening 36 formed in the body 18 is located at a position eccentric with respect to the centre axis of the hollow cylindrical portion 35. A protruding portion of the body 18 located on the centre axis of the hollow cylindrical portion 35 forms a valve seat 37 having a flat seat surface. A hollow cylindrical movable valve element 38 faces the valve seat 37. The valve element 38 is located in the hollow cylindrical portion 38 and is supported by a central portion of a diaphragm 39 having a large pressure receiving area. The diaphragm 39 partitions the interior of the hollow cylindrical portion 35, and is urged by a spring 40 in seating direction to the valve seat 37. A flow rate limiting orifice 41 is formed through the hollow cylindrical valve element 38. The diaphragm 39 allows the valve element 38 to move in alignment with and relatively to the flat seat surface of the valve seat 37.

The differential pressure between the evaporator inlet 11 and the evaporator outlet 12 is sensed by the diaphragm 39. As a result, even with the evaporator 6 producing only a small pressure loss and a small differential pressure, the diaphragm 39 having a large pressure-receiving area reliably senses the small differential pressure and generates a sufficiently strong actuating force for the valve element 38.

When the automotive air conditioner is not in operation, or when it is operating with low refrigeration load, the valve element 38 is seated on the valve seat 37 by the spring 40 to close the differential valve 8. When the automotive air conditioner is operating with high refrigeration load, refrigerant flows through the evaporator 6 at a large flow rate, and hence the differential pressure between the pressure at the refrigerant inlet 11 and the pressure at the refrigerant outlet 12 is increased. When the differential pressure becomes larger than a predetermined value, the differential pressure valve 8 is opened. As a consequence, low-temperature moist refrigerant having been just throttled and expanded flows via the hollow cylindrical valve element 38 into the low-pressure pipe 4b and is mixed there with refrigerant from the evaporator 6. At this time, the flow rate of th bypassing refrigerant is limited by the orifice 41 in the valve element 38. The moist refrigerant is completely evaporated by the internal heat exchanger 4, and is then sucked by the compressor 1. Since the temperature of the refrigerant becomes lower during evaporation, the refrigerant returning from the evaporator 6 is cooled, whereby the temperature of refrigerant compressed and discharged by the compressor 1 is prevented from becoming too high, to prevent thermal deterioration of lubricating oil.

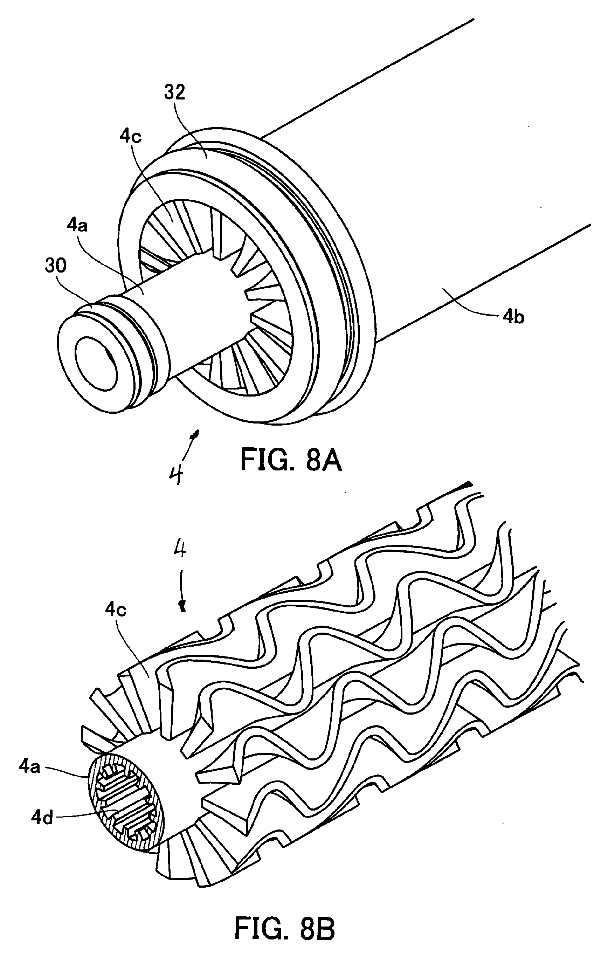

The internal heat exchanger 4 in Figs 8A, 8B is formed by inserting the high-pressure pipe 4a into the low-pressure pipe 4b. The high-pressure pipe 4a has a plurality of radial peripheral baffles 4c, and a plurality of radial inner protrusions 4d. The high-pressure pipe 4a is formed by working on a pipe material which is formed by drawing and has the baffles 4c and the protrusions 4d such that the outer edges of the baffles 4c are bent into wavy shapes in longitudinal direction. Further, the foremost end of the high-pressure pipe 4a is subjected to rib processing for disposing the O-ring 30. Rib processing is similarly performed on the foremost end of the low-pressure pipe 4b so as to dispose the O-ring 32.

The baffles 4c between the high-pressure pipe 4a and the low-pressure pipe 4b mechanically maintain the coaxial relationship between both pipes. By bending the baffles 4c into the wavy form, the contact areas between refrigerant flowing through the low-pressure pipe 4b and the baffles 4c are increased to enhance the heat transfer efficiency between high-temperature refrigerant flowing through the high-pressure pipe 4a and low-temperature refrigerant flowing through the low-pressure pipe 4b.

## Claims

1. Automotive air conditioner, comprising at least a compressor (1), a condenser (2), an expansion valve (5) an evaporator (6), and a receiver (3), **characterised in that** the expansion valve (5) is a thermostatic expansion valve having an inlet (16) to which is connected a high-pressure refrigerant pipe and an outlet (17) to which is connected a refrigerant inlet pipe of the evaporator (6),
that the thermostatic expansion valve (5) is accommodated in a casing (7) directly connected to an evaporator outlet (12),
that an internal heat exchanger (4) is provided between the casing (7) at one side and the compressor (1) and the receiver (3) at the other side for performing heat exchange between high-pressure refrigerant and low-pressure refrigerant returning from the casing (7) to the compressor (1),
that the internal heat exchanger (4) is connected to the casing (7),
that a pipe joint (9) is provided for independently connecting a high-pressure pipe (4a) from the receiver (3) and a low-pressure pipe (4b) to the compressor (1), and
that the pipe joint (9) is connected to an end of the internal heat exchanger (4) on a side opposite to a side where the casing (7) is connected to the internal heat exchanger (4).

2. Automotive air conditioner according to claim 1, **characterised in that** the internal heat exchanger (4) is formed by a double pipe in which the low-pressure pipe (4b) for returning low-pressure refrigerant to the compressor (1) is coaxially disposed outside and around the high-pressure pipe (4a) containing high-pressure refrigerant.

3. Automotive air conditioner according to claim 2, **characterised in that** heat transfer baffles (4c) are arranged in the double pipe between the high-pressure pipe (4a) and the low-pressure pipe (4b), the heat transfer baffles (4c) holding the low-pressure pipe and the high-pressure pipe in coaxial relationship.

4. Automotive air conditioner according to claim 1, **characterised in that** the expansion valve (5) contains a valve element (20), a valve seat (19), and a shaft (23) moving in unison with the valve element (20),
that a back pressure cancelling structure is provided in which an area of the valve element (20) loaded by high inlet pressure of the expansion valve (5) in valve-opening direction and an area of the shaft (23) loaded by the high pressure in valve-closing direction of the valve element (20) are substantially equal, and
that the valve element (20) is provided with a guiding structure comprising at least one guide (20b) for axially guiding the valve element (20) coaxial in a valve hole of the valve seat (19) during opening and closing operations of the expansion valve (5).

5. Automotive air conditioner according to claim 1, **characterised in that** the expansion valve (5) is provided with a differential pressure valve (8) for causing refrigerant having been just expanded by passing through the expansion valve (5) to bypass to the low-pressure pipe (4b) of the internal heat exchanger (4), as soon as a differential pressure between an evaporator inlet pressure and an evaporator outlet pressure exceeds a predetermined value.

6. Automotive air conditioner according to claim 5, **characterised in that** the differential pressure valve (8) includes a diaphragm (39) for sensing the differential pressure, a hollow cylindrical valve element (38) supported in a centre of the diaphragm (39), a spring (40) urging the hollow cylindrical valve element (38) in valve-closing direction relative to a valve seat (37), preferably a valve seat (37) having a flat surface, and that an orifice (41) is disposed in a refrigerant passage of the hollow cylindrical valve element (38).

7. Automotive air conditioner according to claim 2, **characterised in that** the pipe joint (9) is a block body, preferably having opposite end faces, that the pipe joint (9) has one end face formed with a first connecting hole (9a) into which an end of the low-pressure pipe (4b) of the double pipe is fitted, and a second connecting hole (9b) coaxially disposed in the first connecting hole (9a), that an end of the high-pressure pipe (4a) is fitted into the second connecting hole (9b), and that the pipe joint (9) has another end face having a third connecting hole (9c) and a fourth connecting hole (9d) arranged in parallel side-by-side relationship for separately communicating with the first and the second connecting holes (9a, 9b).

8. Automotive air conditioner according to claim 1, **characterised in that** the pipe joint (9) is disposed in a firewall (10) separating an engine room from a vehicle compartment, and that one end face of the pipe joint (9) is situated in the vehicle compartment and the other in the engine room.
